# EUROPEAN PATENT SPECIFICATION

(11) **EP 2 025 452 B1**
(45) Date of publication and mention of the grant of the patent: **06.07.2011**
(21) Application number: 06732540.7
(22) Date of filing: 12.05.2006
(51) Int. Cl.: B23Q 7/00, B23Q 1/66

(54) **MACHINE TOOL APPARATUS**
WERKZEUGMASCHINENVORRICHTUNG
MACHINE-OUTIL

(43) Date of publication of application: 18.02.2009
(73) Proprietor: OKS Co., Ltd., Tokyo, 120-0015 (JP)
(72) Inventor: OKANDA, Satoshi, Tokyo 120-0015 (JP)
(74) Representative: Köppen, Manfred
(86) International application number: PCT/JP2006/309559
(87) International publication number: WO 2007/132506

(56) References cited:
- EP-A2- 0 111 368
- WO-A1-91/01196
- JP-A- 03 264 243
- JP-A- 10 263 974
- JP-A- 2002 154 029
- JP-A- 2002 361 537
- JP-A- 2005 188 670
- US-A- 4 173 817
- US-A- 4 999 895

## Description

### TECHNICAL FIELD

The present invention relates to a machine tool apparatus for machining a machining object using a tool by controlling the relative position between the tool and the machining object held by a jig.

### BACKGROUND ART

There are conventional machine tools in which a controller ascertains the positional information of a tool and a machining object that is specified by a coordinate value, and the controller drives a drive motor housed in the machine tool on the basis of the positional information, whereby the tool and the machining object are moved and machining is carried out (e.g., see Patent Document 1)

Patent Document 1: Japanese Laid-open Patent Application No. 2005-313239 (Page 5, FIG. 1).
JP 10 263974 A shows a machine tool apparatus according to the preamble of claim 1.

### DISCLOSURE OF THE INVENTION

### [Problems to Be Solved by the Invention]

However, the machine tool described in Patent Document 1 has a problem in that the time for stopping the machine tool is extended and the utilization ratio of the machine tool is reduced because, in general, when the machining object designed to be machined is mounted on a jig and machined, the machine tool must be stopped each time the machining object is machined, the machined object must be dismounted from the jig fixed at the machining position in which the machining object is to be machined by the tool, an unfinished machining object must be mounted on the jig, and time is required in the mounting/dismounting work for switching out the machining object.

The present invention was contrived in view of the foregoing problems, and an object is to provide a machine tool that can reduce the time for stopping the work of machining a machining object, and that can improve the utilization ratio in the work of machining a machining object using a machine tool.

### [Means for Solving the Problems]

In order to solve the above-described problems, the machine tool apparatus according to a first aspect of the present invention is a machine tool apparatus as defined in claim 1.

In accordance with this aspect, the machining object is retracted from the machining position together with the jig after machining has ended, whereupon a new second jig that is separate from the second jig on which the machining object is mounted in advance can be mounted instead on the first jig, i.e., in the machining position. Therefore, the utilization ratio of the machine tool apparatus can thereby be effectively improved because the work for mounting and dismounting the machining object is not required to be performed in the machining position, and the time for stopping the work for machining the machining object can be reduced.

Furthermore, apart from the machining position, a standby position is provided for mounting/dismounting the machining object to/from the second jig.
In accordance with this aspect, the work of mounting and dismounting a processed machining object held in the second jig, as well as work of mounting and dismounting an unprocessed machining object, can each be carried out in a safe manner in a standby position that is separate from the machining position.

Furthermore a retracted position for retracting the second jig from the machining position is provided apart from the standby position, and guidance means is provided for moveably guiding the second jig between the machining position and the retracted position.
In accordance with this aspect, the second jig can be reliably moved between the machining position and the retracted position by merely applying force to the second jig because the second jig is guided by the guidance means when moved between the machining position and the retracted position.

The machine tool apparatus according to a second aspect of the present invention is the machine tool apparatus according to the first aspect, characterized in that a convexity that fits into the second jig is provided to the first jig, and a concavity that fits onto the convexity is provided to the second jig.
In accordance with this aspect, the concavity of the second jig is fitted onto the convexity of the first jig, whereby the second jig can be accurately positioned in relation to the first jig.

The machine tool apparatus according to a third aspect of the present invention is the machine tool apparatus according to the second aspect, characterized in that said mounting/dismounting means is disposed in the vicinity of the mutually fitting terminal portions of said convexity and said concavity, and is configured so that a mounting function performed by said mounting/dismounting means is carried out after the fitting of said convexity and said concavity is completed.
In accordance with this aspect, costs can be reduced because a member for mounting and dismounting the first and second jigs, and a member for positioning during mounting and dismounting, can be used in combination, and the second jig can be reliably mounted because the second jig is mounted on the first jig after positioning has been completed.

The machine tool apparatus according to a fourth aspect of the present invention is the machine tool apparatus according to the third aspects, characterized in that the convexity is provided to the upper surface of the first jig, the concavity is provided to the lower surface of the second jig, and elevator means for elevating and lowering the second jig using the first jig is provided apart from the guidance means for substantially horizontally guiding the second jig to the machining position.
In accordance with this aspect, a position can be reliably and efficiently fixed using the convexity and the concavity because the second jig is moved substantially parallel to the machining position direction and is lowered and fitted onto the first jig.

The machine tool apparatus according to a fifth aspect of the present invention is the machine tool apparatus according to any of the first to fourth aspects, characterized in that at least two of the standby positions are provided for the single retracted position.
In accordance with this aspect, since the second jig is moved to one standby position and the other jig waiting in the other standby position can be moved to the machining position via the retracted position, exchange with the second jig can be rapidly carried out.

The machine tool apparatus according to an sixth aspect of the present invention is the machine tool apparatus according to any of the first to fifth aspects, characterized in that the standby positions are provided to the left and right of the retracted position.
In accordance with this aspect, a user can mount, dismount, and move the second jig to the machining position in a location as near as possible to the machining position.

### BRIEF DESCRIPTION OF THE DRAWINGS

FIG. 1 is a perspective view showing the NC machine tool in embodiment 1;
FIG. 2 is a plan view showing the clamp palette and the mount;
FIG. 3 is a front view showing the clamp palette;
FIG. 4 is a plan view showing the work palette;
FIG. 5 is a front view showing the work palette;
FIG. 6 is a bottom view showing the work palette;
FIG. 7(a) is a longitudinal sectional front view showing the clamp apparatus prior to connection; FIG. 7(b) is a longitudinal sectional front view showing the clamp apparatus after connection;
FIG. 8 is a side view showing the work of machining a workpiece using an NC machine tool;
FIG. 9 is a side view showing the work of machining a workpiece using an NC machine tool;
FIG. 10 is a side view showing the work of machining a workpiece using an NC machine tool;
FIG. 11 is a side view showing the work of machining a workpiece using an NC machine tool;
FIG. 12 is a perspective view showing the NC machine tool in embodiment 2;
FIG. 13 is a perspective view showing the NC machine tool in embodiment 3;
FIG. 14 is a perspective view showing the NC machine tool in embodiment 4;

### [KEY]

- 1, 1a: NC machine tools (machine tool apparatus)
- 1b, 1c: NC machine tools (machine tool apparatus)
- 2, 2b: Cases
- 3: Drill tool (tool)
- 5, 5b: Clamp palettes (first jig, machine position)
- 8: Workpiece (machining object)
- 11, 11a: Mounts (standby position, retracted position)
- 11b, 11b': Mounts (standby position, retracted position)
- 11c: Mount (standby position, retracted position)
- 13: Palette guides (standby position, retracted position)
- 14, 14b: Work palettes (second jig)
- 14c: Work palette (second jig)
- 17: Clamp device (convexity)
- 18, 18b: Elevator rail members (guidance means, elevator means)
- 21: Actuator (elevator means)
- 22, 22b: Fixed rail members (guidance means)
- 24, 25: Roller
- 26: Contact piece (stopping means)
- 32: Handle (grip)
- 32b, 32b': Handle (grip)
- 33: Engagement groove
- 34: Clamp ring (Concavity)
- 34': Engagement portion (mount/dismounting means)
- 35': Sliding surface (sliding portion)
- 44: Ball (mount/dismounting means)
- 48: Transfer rail member (guide path)

### BEST MODE FOR CARRYING OUT THE INVENTION

Preferred embodiments for implementing the machine tool apparatus according to the present invention are described below using examples.

### Embodiment 1

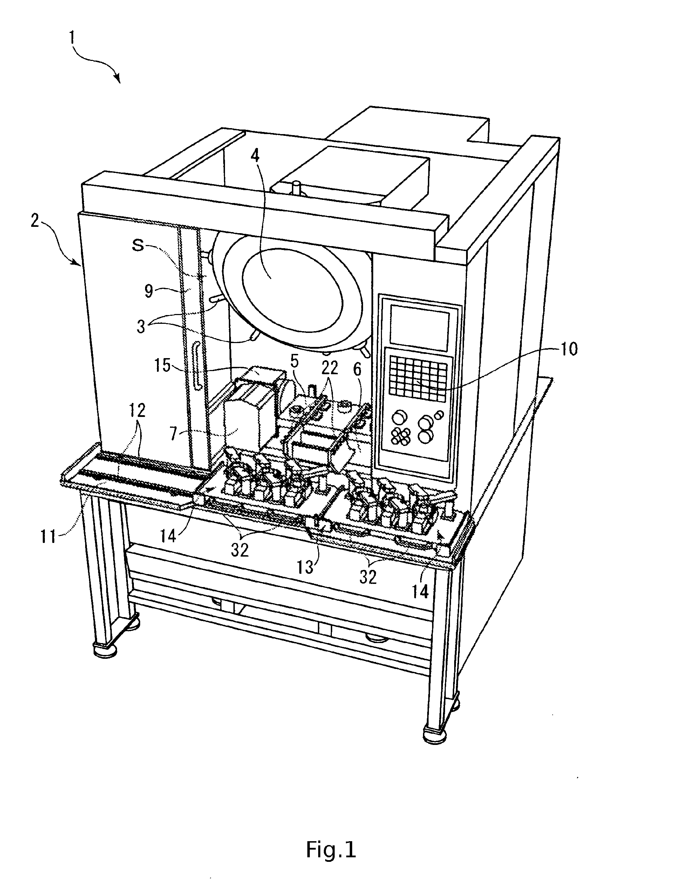

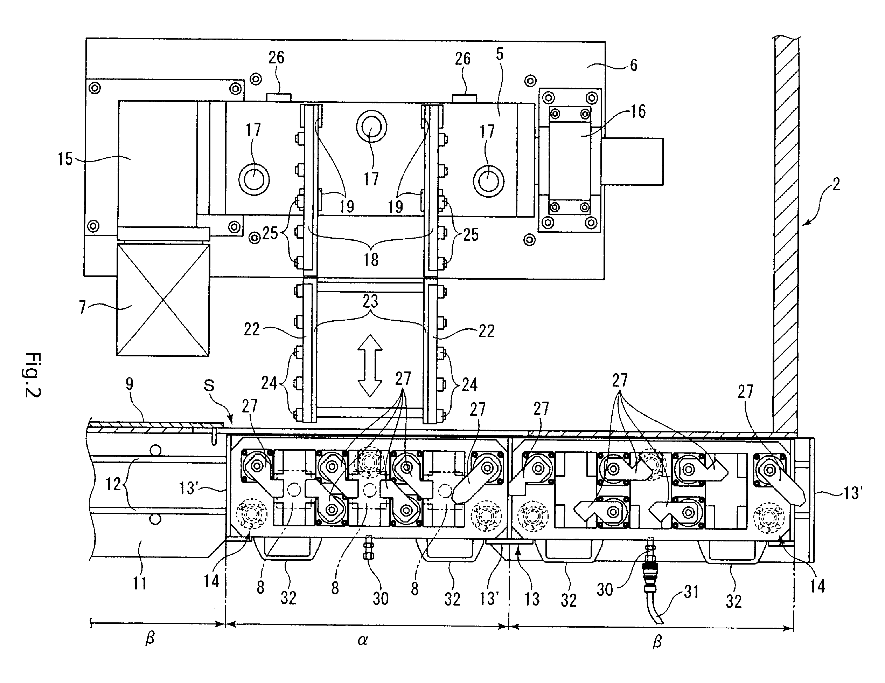

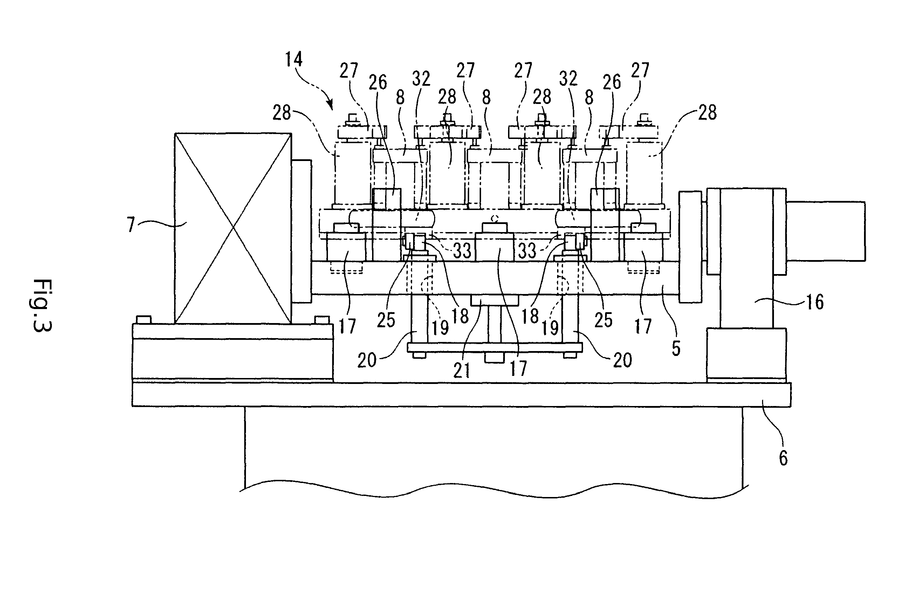

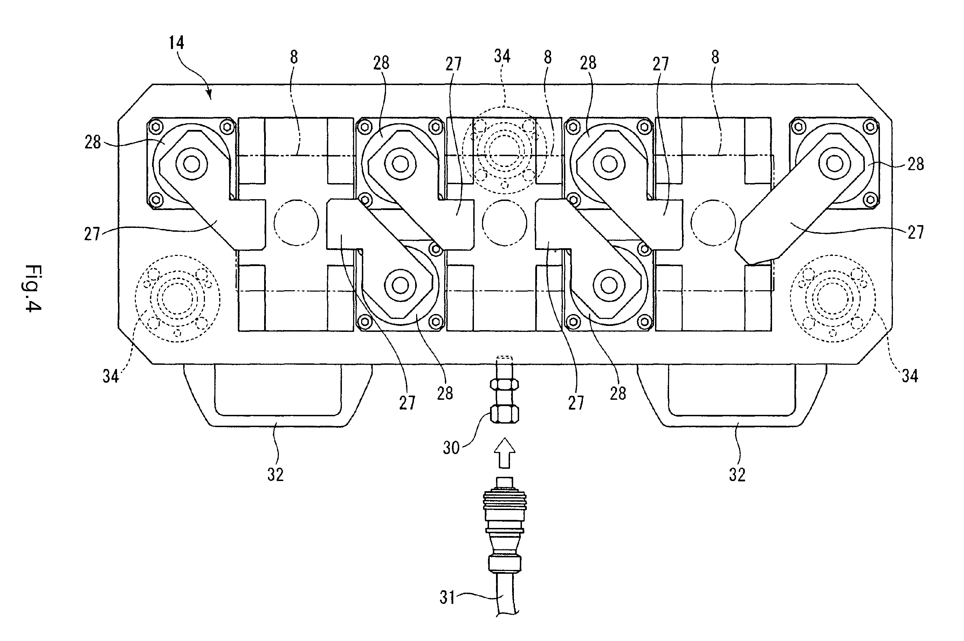

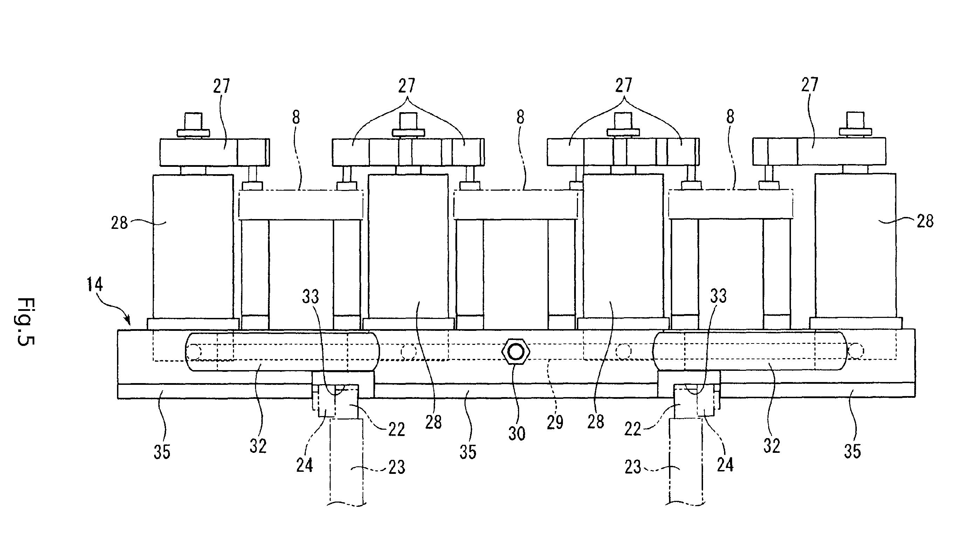

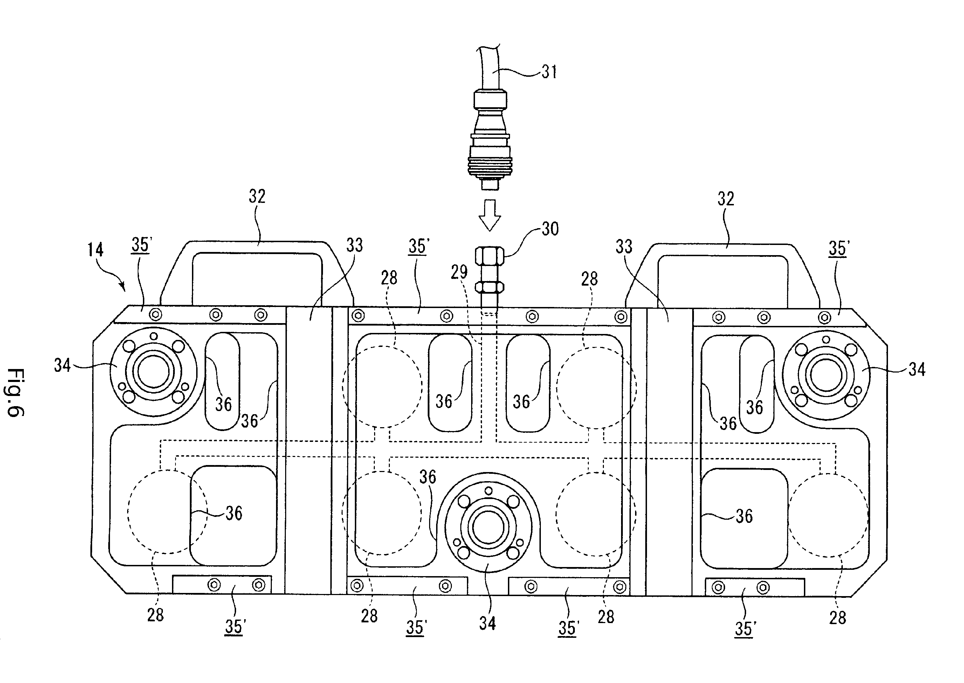

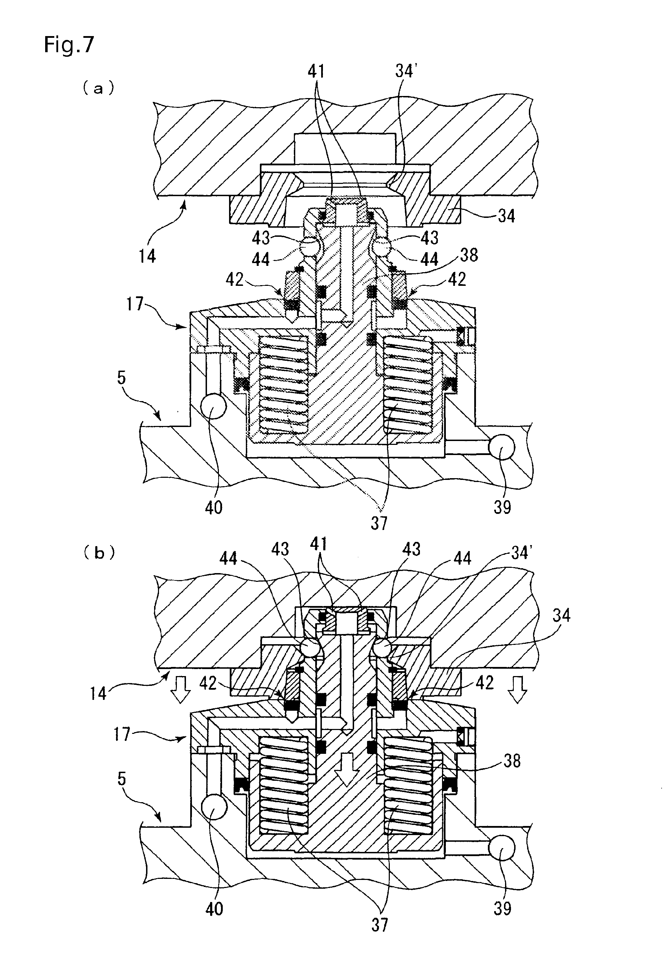

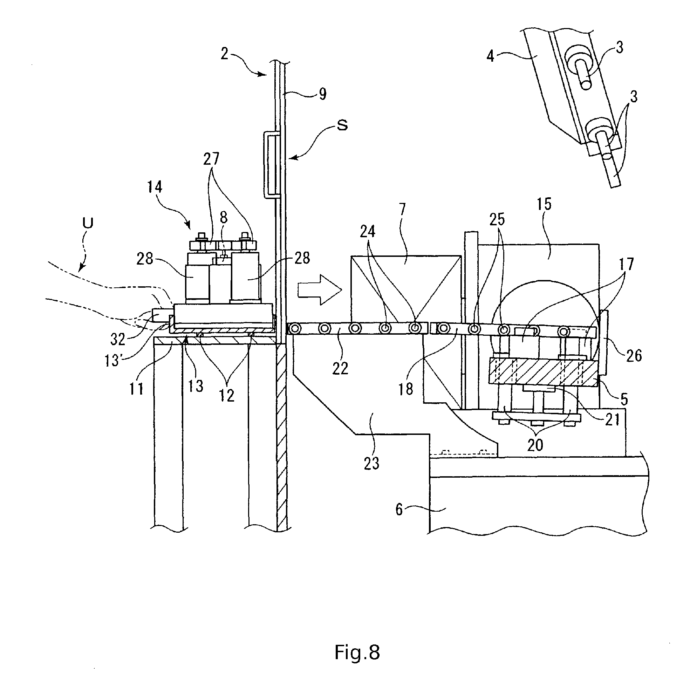

Examples of the present invention are described with reference to the diagrams. First, FIG. 1 is a perspective view showing the NC machine tool in embodiment 1, FIG. 2 is a plan view showing the clamp palette and the mount, FIG. 3 is a front view showing the clamp palette, FIG. 4 is a plan view showing the work palette, FIG. 5 is a front view showing the work palette, FIG. 6 is a bottom view showing the work palette, FIG. 7(a) is a longitudinal sectional front view showing the clamp apparatus prior to connection, FIG. 7(b) is a longitudinal sectional front view showing the clamp apparatus after connection, and FIGS. 8 to 11 are side views showing the work of machining a workpiece using an NC machine tool. Hereinbelow, the front side of the paper surface of FIG. 1 is the front surface (front side) of the NC machine tool, the lower side of the paper surface of FIGS. 2 and 4 is the front surface (front side) of the NC machine tool, the upper side of the paper surface of FIG. 6 is the front surface (front side) of the NC machine tool, and the left side of the paper surface of FIGS. 8 to 11 is the front surface (front side) of the NC machine tool.

Reference numeral 1 of FIG. 1 denotes an NC machine tool 1 used as the machine tool apparatus of the present invention, and a tool unit 4 on which a plurality of drill tools 3 is mounted is disposed inside a case 2 of the NC machine tool 1. A worktable 6 having a clamp palette 5 as a first jig of the present invention is disposed below the tool unit 4, and a drive motor 7 for actuating the clamp palette 5 is provided to the worktable 6 (see FIG. 2).

In the NC machine tool 1, the position of the tool unit 4 and the position of the workpiece 8 as the later-described machining object are defined by a coordinate value, and a controller (not shown) is configured to operate the tool unit 4 and the clamp palette 5 on the basis of the positional information. In other words, the relative position between the workpiece 8 and the tool unit 4 is controlled automatically. The arranged position of the worktable 6 provided with the clamp palette 5 is the machining position in which the workpiece 8 (machining object) is to be machined.

An aperture S for loading and removing later-described work palettes 14 is formed in the front surface of the case 2, and a sliding slide door 9 that is automatically opened and closed by the controller (not shown) is provided to the aperture S. The slide door 9 is closed so that grinding fluid, chips, and the like are not scattered to the exterior of the case 2 when machining work is carried out inside the case 2. A control panel 10 is disposed in the vicinity of the aperture S, and the user operates the control panel 10 in order to give instructions to the controller (not shown) and perform machining work.

A mount 11 having a long side extending in the left/right horizontal direction is positioned toward the front surface of the case 2, two guide rail members 12 are provided to the upper surface of the mount 11 along the lengthwise direction, and a palette guide 13 is provided that slides in the left/right direction on the guide rail members 12. The height of the upper surface of the palette guide 13 is substantially the same as the height of fixed rail members 22.

The palette guide 13 is designed so that two work palettes 14 can be arranged to the left and right and mounted as the second jig in the present invention on the upper surface of a plate member that forms a rectangle as viewed from above, as shown in FIG. 2. The guide has an erect piece 13' provided to the side surface and the front surface of the palette guide 13 to prevent the work palettes 14 from falling. The palette guide 13 is designed so as to be capable of moving on the mount 11 in the left/right direction along the guide rail members 12, and so that when one of the work palettes 14 of the two work palettes 14 disposed on the left and right of the palette guide 13 is positioned on the front surface of the aperture S of the case 2, the other work palette 14 can be moved to the area on the left or right of the mount 11.

The area at the front surface of the aperture S in the mount 11 constitutes a retracted position α of the present invention, and the areas on the left and right sides in the mount 11, i.e., the areas provided to the left and right of the retracted position α, constitute the standby positions β of the present invention. For example, in FIG. 2, the palette guide 13 is moved to the right side of the mount 11, the left side of the palette guide 13 becomes the retracted position α at this time, and the right side of the palette guide 13 becomes the standby position β. In the case that the palette guide 13 is moved to the left side of the mount 11, the right side of the palette guide 13 becomes the retracted position α, and the left side of the palette guide 13 becomes the standby position β.

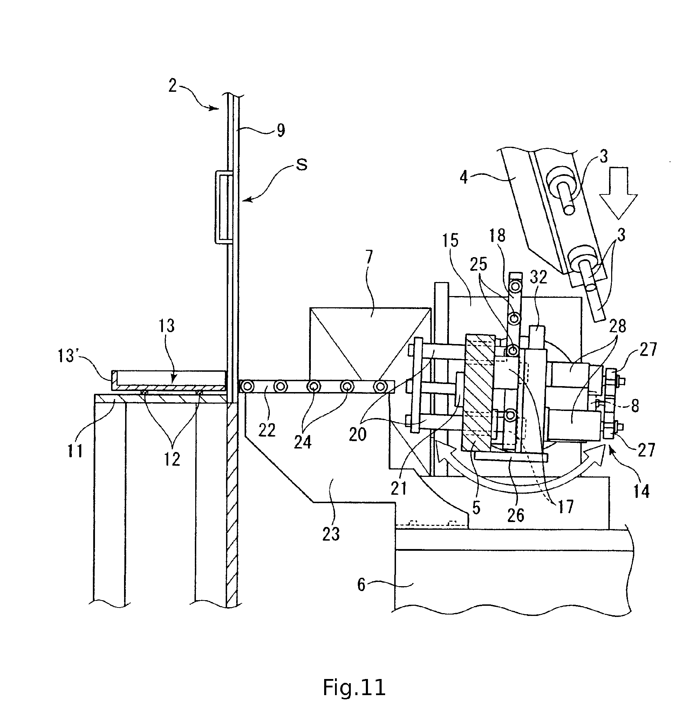

The drive motor 7 and clamp palette 5 are disposed in the upper portion of the worktable 6, as shown in FIG. 2. The clamp palette 5 has the shape of a rectangular plate as viewed from above, and power from the drive motor 7 disposed toward the left end of the clamp palette is transmitted to the clamp palette 5 via a rotating gear 15. A pivot bearing 16 is disposed toward the left end of the clamp palette 5, and the clamp palette 5 is rotated in the vertical direction when the controller (not shown) drives the drive motor 7 (see FIG. 11).

Three clamp devices 17 constituting the convexities of the present invention, and two elevator-rail members 18 (elevator means) extending in the forward/rearward horizontal direction, are disposed on the upper surface of the clamp palette 5. Elevator rail members 18 are fixed to the upper end of a support rod 20 that passes completely through the clamp palette 5 via a hole portion 19 provided to the clamp palette 5, and the support rod 20 is connected to an actuator 21 as the elevator means of the present invention provided to the lower surface of the clamp palette 5. The elevator rail members 18 are moved in the vertical direction relative to the clamp palette 5 by driving the actuator 21, and the elevator rail members 18 can be brought close to or moved away from the clamp palette 5.

Two fixed rail members 22 are positioned toward the front surface of the clamp palette 5 so as to extend in the forward/rearward horizontal direction, as shown in FIG. 2. The fixed rail members 22 are fixed to the worktable 6 via metal support fittings 23 (see FIG. 8), and extend from the vicinity of the front-end portion of the elevator rail members 18 to the vicinity of the aperture S. A plurality of rollers 24, 25 is provided to the side portion of the elevator rail members 18 and the fixed rail members 22. The elevator rail members 18 and the fixed rail members 22 constitute the guidance means of the present invention.

The elevator rail members 18 and clamp palette 5 are slightly inclined downward to the rearward side of the work palettes 14 (loading direction of the work palettes 14), and the angle of inclination is about 2 to 3 degrees. Contact pieces 26, used as a stopping means of the present invention, are erectly provided to the rear end side of the clamp palette 5.

The work palettes 14 are described in detail next. The work palettes 14 have a rectangular plate shape as viewed from above, as shown in FIG. 4. Six chucks 27 as holding means are provided to the upper surface of each of the work palettes, and a plurality (three in the present embodiment) of workpieces 8 can be detachably held in place. The chucks 27 are provided above cylinders 28 disposed on the upper surface of the work palettes 14, and are urged by a coil spring (not shown) disposed inside the cylinders 28 so as to constantly move downward, as shown in FIG. 5. The workpiece 8 is fixed by the urging force of the coil spring.

A hydraulic branch tube 29 connected to the cylinders 28 is arranged inside the work palettes 14, and the hydraulic branch tube 29 is connected to a socket 30 disposed on the periphery at the front surface of the work palettes 14, as shown in FIG. 6. The user connects an air hose 31 to the socket 30 when the workpiece 8 is to be removed from the work palettes 14. When compressed air (fluid) is allowed to flow into the interior of the hydraulic branch tube 29, the fluid pressure acts against the urging force of the coil springs (not shown) inside the cylinders 28, the coil springs (not shown) are compressed and made to push the chucks 27 upward, the holding state of the workpiece 8 is cancelled, and the workpiece 8 can be removed from the work palettes 14.

Two handles 32 are provided as grips of the present invention on the periphery at the front surface of each of the work palettes 14. Engagement grooves 33 extending in the forward/rearward direction are furthermore formed on the bottom surface of the work palettes 14. The engagement grooves 33 have a metal plate that is curved and formed so as to form the shape of the letter "L" as viewed from the front surface, and the left/right width of the engagement grooves 33 is substantially the same as the left/right width of the elevator rail members 18 and the fixed rail members 22.

The engagement grooves 33 engage the elevator rail members 18 and the fixed rail members 22 (see FIG. 5) when the work palettes 14 are moved between the mount 11 and the clamp palette 5. The elevator rail members 18 and the fixed rail members 22 engage the engagement grooves 33, whereupon rollers 24, 25 provided to the elevator rail members 18 and to the fixed rail members 22 make contact with the engagement grooves 33.

A guide piece 35 is provided to the periphery at the front, back, and side surfaces on the bottom surface of the work palettes 14, and the guide piece 35 makes contact with the erect piece 13' of the palette guide 13 when the work palettes 14 are mounted on the palette guide 13.

The lower end of the guide piece 35 is extended below the lower end of clamp rings 34, and the lower surface of the guide piece 35 has a sliding surface 35' with which contact is made when the work palettes 14 are slidably moved on the palette guide 13. Accordingly, the upper surface of the palette guide 13 can be prevented from making contact with the clamp rings 34 when the work palettes 14 are mounted on the palette guide 13, and there is no danger that defects and warping will be generated in the clamp rings 34.

A fluororesin may be applied to the engagement grooves 33 and the guide piece 35 in order to reduce sliding resistance on the surface of the engagement grooves and the guide piece, and the engagement grooves 33 and the guide piece 35 as such may be formed using a resin or the like having low sliding resistance. Although not shown in particular, a plurality of rollers or the like may be disposed on the bottom surface of the work palettes 14 to reduce friction resistance during slidable movement on the fixed rail members 22, the elevator rail members 18, and the palette guide 13.

Three clamp rings 34 that constitute the concavities of the present invention and are connected to the three clamp devices 17 described above are provided to the bottom surface of the work palettes 14, and the clamp rings 34 are connected to the clamp devices 17, whereby the work palettes 14 are mounted on the clamp palette 5.

The work palettes 14 in the present embodiment are formed using aluminum, duralumin, or another lightweight metal material in order to reduce the weight of the work palettes, and lightening holes 36 for reducing weight are formed in a plurality of locations in the bottom surface of the work palettes 14. Each of the work palettes 14 of the present embodiment is formed so that the weight is 15 kg or less, and the palettes have a weight and size that allows the work palettes to be easily carried by the user.

The clamp devices 17 and the clamp rings 34 will be described next. A piston rod 38 urged downward by a clamp spring 37 is provided to the clamp devices 17, and the piston rod 38 is moved upward by the pressure of the hydraulic fluid fed from the hydraulic fluid supply tube 39 to the lower surface of the piston rod 38 in a state in which the work palettes 14 have been dismounted from the clamp palette 5.

An air supply tube 40 is connected to the clamp devices 17; compressed air fed from the air supply tube 40 is discharged from a discharge port 41 provided to the upper end portion of the piston rod 38 and from a gap 42 provided to the step portion of each of the clamp devices 17; and grinding fluid, chips, and the like that adhere to the clamp devices 17 and the clamp rings 34 are removed by the discharged air.

A controller (not shown) reduces the hydraulic pressure of the hydraulic fluid supplied from the hydraulic fluid supply tube 39 when the elevator rail members 18 are lowered and the clamp rings 34 make contact above the clamp devices 17 in the case that the work palettes 14 and the clamp palette 5 are connected, as shown in FIG. 7(b). At this time, the piston rod 38 is lowered by the urging force of the clamp spring 37, the upper portion of the clamp devices 17 is inserted into the clamp rings 34, and the clamp devices 17 and clamp rings 34 fit each other.

Balls 44 make contact with an inclined surface 43 formed on the side surface of the piston rod 38 at the same time that the piston rod 38 descends, and the balls 44 protrude outward from the clamp devices 17. The protruding balls 44 engage an engagement portion 34' formed in the clamp rings 34, and the clamp rings 34 and the clamp devices 17 are connected. The locations in which the engagement portion 34' and the balls 44 are provided to the clamp rings 34 and the clamp devices 17 constitute fitting terminal portions of the present invention.

When the clamp rings and the clamp devices 17 are connected and held close to each other, the outflow of air from the discharge port 41 and the gap 42 stops, a sensor (not shown) disposed inside the air supply tube 40 senses that the outflow of the air has stopped, and a controller (not shown) actuates the drive motor 7 and the tool unit 4 on the basis of the sensing of the sensor (not shown) to start machining work.

The piston rod 38 is moved upward by the hydraulic pressure, and the balls 44 move away from the inclined surface 43 of the piston rod 38, when the hydraulic pressure of the hydraulic fluid supplied from the hydraulic fluid supply tube 39 is increased in the case that the connection state between the work palettes 14 and the clamp palette 5 is released. Therefore, the balls 44 are accommodated inside the clamp devices 17, the engagement state between the balls 44 and the clamp rings 34 is released, and the work palettes 14 are dismounted from the clamp palette 5.

Application examples of the NC machine tool 1 are described next with reference to FIG. 2 and FIGS. 8 through 11. First, the user moves the palette guide 13 so that one of the work palettes 14 holding a workpiece 8, among the two left and right work palettes 14 mounted on the palette guide 13, is disposed at the front surface of the fixed rail members 22, i.e., the retracted position α, as shown in FIG. 2. The user U grips the handles 32 of one of the work palettes 14 disposed in the retracted position α, as shown in FIG. 8, and presses the work palettes 14 into the interior of the case 2 while sliding [the work palettes] on the fixed rail members 22 and the elevator rail members 18, as shown in FIG. 8. In other words, the work palettes 14 are moved horizontally to the machining position while being guided by the fixed rail members 22 and the elevator rail members 18.

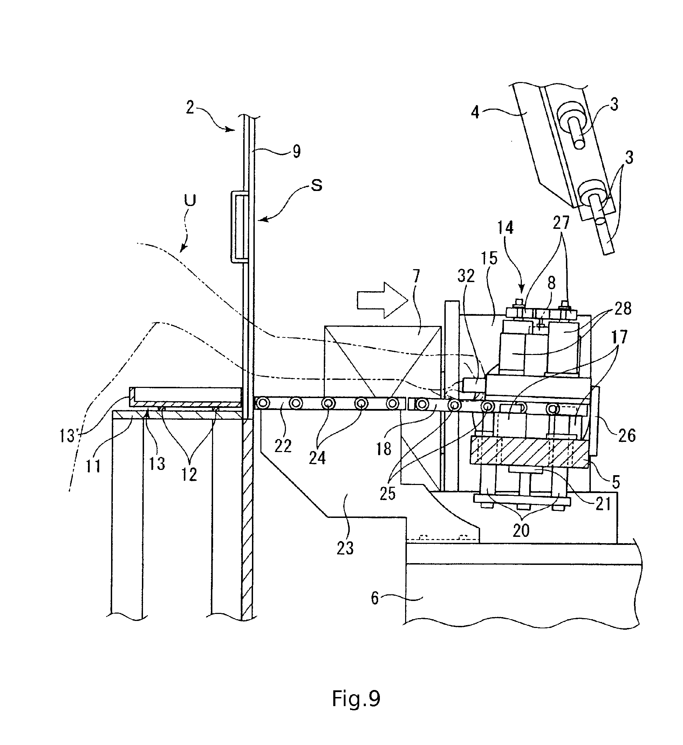

A plurality of rollers 24, 25 is disposed on the fixed rail members 22 and the elevator rail members 18, as shown in FIG. 9, whereby the sliding friction generated between the fixed rail members 22, the elevator rail members 18, and the work palettes 14 can be reduced during movement of the work palettes 14, and the work palettes 14 are smoothly slid and moved on the elevator rail members 18 and the fixed rail members 22.

When the work palettes 14 are mounted on the elevator rail members 18, the elevator rail members 18 are inclined so as to slope downward to the rearward side, whereby the work palettes 14 mounted on the elevator rail members 18 move in the rearward direction (loading direction) by self-weight. The work palettes 14 stop moving when the rear end portion makes contact with the contact pieces 26, and the work palettes 14 are positioned without backtracking because of the slope of the elevator rail members 18. In other words, positioning can be reliably carried out because the work palettes 14 are held in a state of pressed contact against the contact pieces 26 even if the user releases the handles 32 of the work palettes 14 in the stopped position in which the rear end portions of the work palettes 14 are in contact with the contact pieces 26.

The work palettes 14 slide while the engagement grooves 33 provided to the bottom surface are in engagement with the fixed rail members 22 and the elevator rail members 18, whereby the work palettes 14 are guided and moved without shaking in the left/right direction (see FIG. 5), and the rear end portions of the work palettes 14 make contact with the contact pieces 26. The clamp rings 34 provided to the bottom surface of the work palettes 14 are thereby positioned above the clamp devices 17 provided to the upper surface of the clamp palette 5. The elevator rail members 18 for guiding the work palettes 14 are provided as far as the area above the clamp palette 5, whereby the work palettes 14 can be reliably guided to the machining position.

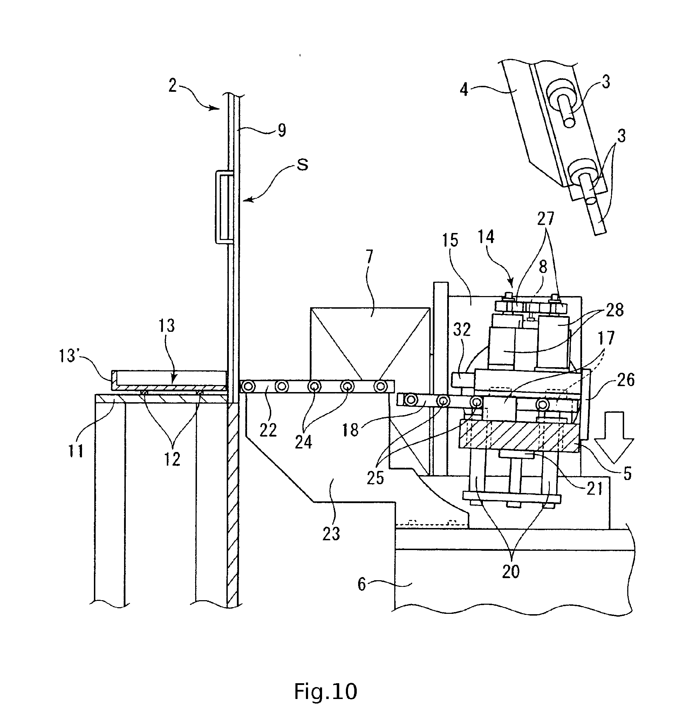

The machining work is started when the user U operates the control panel 10 after the work palettes 14 have been positioned above the clamp palette 5. The controller (not shown) drives the actuator 21 and lowers the elevator rail members 18 on the basis of the operation of the control panel 10, as shown in FIG. 10, and the clamp devices 17 and the clamp rings 34 described above are connected.

The controller (not shown) actuates the drive motor 7 and the tool unit 4 to start the machining work on the basis of the sensor (not shown) having sensed that the outflow of air from the gap 42 and the discharge port 41 of each of the clamp devices 17 described above has been stopped, as shown in FIG. 11. The clamp palette 5 is rotated in the vertical direction by the driving of the drive motor 7, and the upper surface as well as the front and back surfaces of the workpiece 8 are grinded by one of the drill tools 3 mounted in the tool unit 4.

On the other hand, when the workpiece 8 held by one of the work palettes 14 is machined, the palette guide 13 is moved in the left/right direction so that the location in which the work palette 14 is placed is the standby position β, as shown in FIG. 2.

The user connects the air hose 31 to the socket 30 of the palette guide 13 to push the chucks 27 upward, and mounts an unprocessed workpiece 8 on the other work palette 14, which is on standby in the standby position β. When the air hose 31 is removed from the socket 30, the chucks 27 are lowered, and the workpiece 8 is held on the work palette 14. The user uses the time in which the workpiece 8 held on the work palette 14 is being machined to dismount or mount (exchange) a workpiece 8 on the other work palette 14.

When the machining work of the workpiece 8 held on one of the work palette 14 is completed, the controller (not shown) releases the connection between the clamp devices 17 and the clamp rings 34, and the elevator rail members 18 are elevated. The work palette 14 is separated from the clamp palette 5 while the workpiece 8 is retained in a held state. The user U grips the handles 32 of the work palette 14 disposed on the clamp palette 5, i.e., in the machining position, as shown in FIG. 9, and pulls forward and retracts the work palette 14 to the retracted position α on the palette guide 13 (see FIG. 8).

The user U moves the palette guide 13 in the left/right direction so that the other work palette 14 holding an unprocessed workpiece 8 is moved from the standby position β at the front surface of the fixed rail members 22, i.e., to the retracted position α. The user U grips the handles 32 of the other work palette 14, pushes the work palette 14 while slidably moving on the elevator rail members 18 and the fixed rail members 22, moves the work palette 14 above the clamp palette 5, and starts machining work in the same manner as with the first work palette 14 described above. The first work palette 14, on which the machined workpiece 8 is held, is disposed in the standby position β at this time.

The user U connects the air hole 31 to the socket 30 of the first work palette 14, pushes the chucks 27 upward, and removes the workpiece 8. The user uses the time in which the workpiece 8 held on the other work palette 14 is being machined to dismount and mount the workpiece 8 by removing the machined workpiece 8 from the work palette 14 and mounting an unprocessed workpiece 8 on the work palette 14. Workpieces 8 are thereafter sequentially machined while the actions described above are repeated.

In the NC machine tool 1 of the present embodiment, the workpiece 8 is retracted from the machining position together with the work palette 14 after the machining of the workpiece 8 has ended, and a new work palette 14 that is separate from the work palette 14 on which the workpiece 8 is mounted in advance can be mounted instead on the clamp palette 5 disposed in the machining position. That is, rather than being mounted in the machining position as in the prior art, a plurality of workpieces 8 can be mounted and dismounted in a retracted position α and in a standby position β provided separately from the machining position, and the work time for machining the workpiece 8 is thereby not divided by the work of mounting and dismounted the workpiece 8. Therefore, the time in which the work of machining workpieces 8 is stopped can be minimized, and the utilization ratio of the NC machine tool 1 can thereby be effectively improved.

In other words, when the workpiece 8 is exchanged in the machining position, time is required to perform the work of mounting and dismounting workpieces 8 to and from the work palettes 14 in the case that there is a plurality of workpieces 8 as in the present embodiment. In contrast, the time needed to perform the mounting and dismounting work can be considerably reduced in the present invention because the work palettes 14, which constitute the second jig, are merely mounted and dismounted from the clamp palette 5, which constitute the first jig. In the particular case that there is a plurality of types of workpieces 8 to be machined, and the types of workpieces 8 to be machined are varied, the work palettes 14 as such are naturally exchanged in conjunction with the types of workpieces, and the mounting/dismounting mode of the workpiece 8 can also be varied. Therefore, the mounting/dismounting work carried out by the user U is in danger of decreasing. In contrast, sharing the work palettes 14 by a plurality of types of workpieces 8 prevents the efficiency of the mounting/dismounting work from being reduced even if the type of workpiece 8 to be machined is varied. This is because the work of mounting/dismounting the work palettes 14 to and from the clamp palette 5 does not change in accordance with the type of workpiece 8.

Providing the standby position β for mounting/dismounting the workpiece 8 on the work palettes 14 allows the work of mounting/dismounting the machined workpiece 8 held on the work palettes 14 and the unprocessed workpiece 8 to be carried out in a safe and individual manner in a retracted position β that is separate from the machining position adjacent to the drill tools 3 or the like.

Elevator rail members 18 and fixed rail members 22 are provided for moveably guiding the work palettes 14 between the machining position and the standby position α. Therefore, when the user moves the work palettes 14 between the machining position and the retracted position α, [the work palettes] are guided by the elevator rail members 18 and the fixed rail members 22, and can therefore be reliably moved between the machining position and the retracted position α by merely applying force to the work palettes 14.

The clamp devices 17 are provided to the clamp palette 5; the clamp rings 34 that fit onto the clamp devices 17 are provided to the work palettes 14; and the work palettes 14 can be accurately positioned on the clamp palette 5 by mutually fitting the clamp devices 17 and the clamp rings 34.

The mounting function performed by the engagement portion 34' and the balls 44 is carried out after the fitting of the clamp devices 17 and the clamp rings 34 has been completed. The member for mounting/dismounting the clamp palette 5 and the work palettes 14, as well as the member for positioning during mounting/dismounting, can thereby be used in combination. Therefore, not only can manufacturing costs be reduced, but mounting on the work palettes 14 can also be reliably carried out because the work palettes 14 are mounted on the clamp palette 5 after positioning has been completed.

Elevator rail members 18 for elevating and lowering the work palettes 14 on the clamp palette 5 are provided apart from the fixed rail members 22 whereby the work palettes 14 are guided substantially horizontally to the machining position. [The palettes] can thereby be reliably and efficiently fixed in position using the clamp devices 17 and the clamp rings 34 because the work palettes 14 are moved substantially parallel to the machining position direction, and are thereafter lowered, moved, and fitted with the clamp palette 5.

In other words, in the present embodiment, the clamp palette 5 and the work palettes 14 are accurately positioned by the action of fitting the clamp devices 17 (convexities) and the clamp rings 34 (concavities). Therefore, the work palettes 14 must be lowered toward the clamp palette 5 after the work palettes 14 are moved horizontally from the retracted position α to a position above the clamp palette 5. In other words, the work palettes 14 must be horizontally and elevatably moved between the retracted position α and the fitting position on the clamp palette 5, but the movement between these points can be carried out in a state in which the palettes are being guided by the elevator rail members 18 and the fixed rail members 22, which are all the rail members. Therefore, the work palettes 14 can be moved in a very simple manner.

At least two standby positions β are provided for a single retracted position α. The work palettes 14 can thereby be moved to one of the standby positions β, and the other jig, which is on standby in the other standby position β, can be moved to the machining position via the retracted position α. Therefore, the work palettes 14 can be rapidly exchanged.

The standby positions β are provided to the left and right of the retracted position α. A user can thereby mount or dismount a workpiece 8 on the work palettes 14 in a location as close as possible to the machining position, and can move the work palettes 14 to the machining position.

In accordance with the NC machine tool 1 of the present embodiment, the clamp palette 5 and the work palettes 14 are accurately positioned and connected by the clamp devices 17 (convexities) and the clamp rings 34 (concavities). Therefore, locating coordinates (centering) each time the work palettes 14 are exchanged is no longer required as long as the coordinates of the workpiece 8 or the work palettes 14 are located when the first workpiece 8 is machined, and the time in which the machining work of a plurality of workpieces 8 is stopped can be reduced.

### Embodiment 2

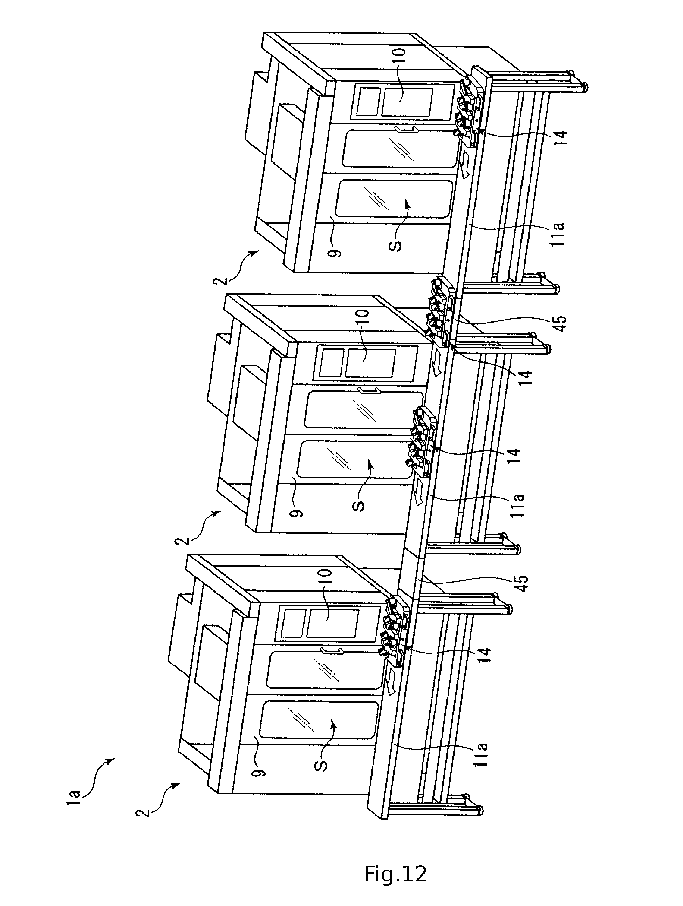

Next, the NC machine tool 1a according to embodiment 2 will be described with reference to FIG. 12. The same reference numerals are used for the same constituent elements as those described in the embodiment described above, and a redundant description is omitted. FIG. 12 is a perspective view showing the NC machine tool 1a in embodiment 2. Hereinbelow, the front side of the paper surface of FIG. 12 will be referred to as the front surface (front side) of the NC machine tool 1a.

Three cases 2 are provided to the NC machine tool 1a in embodiment 2, as shown in FIG. 12, and a worktable 6 is disposed (see FIG. 8) as a machining position in which a tool unit 4 and a clamp palette 5 as a first jig are provided inside each of the cases 2 in the same manner as in embodiment 1 described above. Drill tools 3 suitable for to the machining work are mounted in each of the tool units 4, and different machining work is carried in each of the cases 2.

Mounts 11a are provided toward the front surface of the cases 2, and the mounts 11a are integrally connected to each other by a connecting plate 45. The work palettes 14 as the second jig are slidably moved on the upper surface of the mounts 11a, and can be freely moved in the left/right direction on each of the mounts 11a via the connecting plate 45. In the present embodiment, the area of the mounts 11a disposed at the front surface of the slide door 9 in the mounts 11a; i.e., the area at the front surface of the aperture S, serves as a retracted position, and the other areas of the mounts 11a and the connecting plates 45 serve as standby positions.

The user can sequentially load the work palettes 14 from the case 2 disposed on the right side, mount the work palettes 14 on the mounts 11a when the machining work of the workpiece 8 in the right side case 2 has ended, slidably move the work palettes 14 to the front of the adjacently (centrally) disposed case 2, and load the work palettes 14 into the center case 2. When the machining work in the center case 2 has ended, the work palettes 14 are moved to the front of the left-side case 2 in the same manner, and sequential machining work can be carried out.

In accordance with the NC machine tool 1a of the present embodiment 2, a plurality of worktables 6 is provided as machining positions in which a clamp palette 5 is disposed, and a single work palette 14 is sequentially loaded into the plurality of worktables 6 via the mounts 11a as standby positions. It is thereby possible to arrange a plurality of NC machine tools 1a provided with different tool units 4 or a plurality of NC machine tools 1a for carrying out different types of machining work. The work palette 14 that holds a workpiece 8 are sequentially loaded into the NC machine tools 1a, whereby various workpieces 8 can be machined using a plurality of NC machine tools 1a.

### Embodiment 3

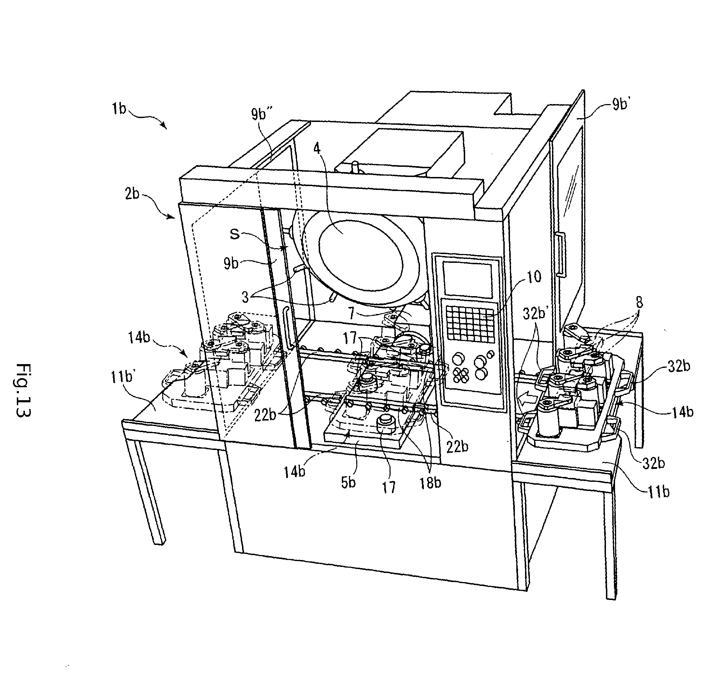

Next, the NC machine tool 1b according to embodiment 3 will be described with reference to FIG. 13. The same reference numerals are used for the same constituent elements as those described in the embodiments described above, and a redundant description is omitted. FIG. 13 is a perspective view showing the NC machine tool 1b in embodiment 3. Hereinbelow, the right side of the paper surface of FIG. 13 will be referred to as the front surface (front side) of the NC machine tool 1b.

The NC machine tool 1b in embodiment 3 has slide doors 9b, 9b', 9b" at the front surface, the back surface, and the side surface of the case 2b; and the fixed rail members 22b and the elevator rail members 18b are disposed from the slide door 9' at the front surface up to the slide door 9b" at the back surface, as shown in FIG. 13. Mounts 11b, 11b' are provided to the area at the front surface and the back surface of the case 2b; and the two mounts 11b, 11b' are configured so as to be dually used for the retracted position and the standby position.

Each work palette 14b has handles 32b, 32b' along the two edges at the front surface and the back surface so that the work palette 14b disposed on the clamp palette 5b as the machining position, which is located in the center of the case 2b, can be drawn out by users from the two sides, i.e., the front surface side and back surface side. Two users are positioned at the front surface and the back surface of the case 2, and workpieces 8 can be mounted on and dismounted from the work palette 14b.

In embodiment 3, an unprocessed workpiece 8 is held on the work palette 14b using the mount 11b disposed at the front surface, and the work palette 14b is loaded into the case 2 from the area at the front surface. The work palette 14b holding a machined workpiece 8 is drawn out from the area near the rear surface, and the workpiece 8 is removed from the work palette 14b using the mount 11b' disposed at the rear surface.

In the NC machine tool 1b of embodiment 3, two mounts 11b, 11b' as standby positions are provided to a single clamp palette 5b as a machining position. Accordingly, a workpiece 8 can be mounted on the work palette 14b in the area at the front surface, and the workpiece 8 can be dismounted from the work palette 14b at the back surface.

For this reason, the work time for mounting and dismounting the workpiece 8 can be shortened because two users can perform the mounting/dismounting work at the same time at the front surface and the back surface of the case 2. Even when machining is performed for a short time in the machining position, two users can mount/dismount a workpiece 8 on the mount 11 at the front surface and the back surface using at least three work palettes 14b while the workpiece 8 held on a single work palette 14b is being machined. Accordingly, the utilization ratio of the NC machine tool 1b can be improved.

### Embodiment 4

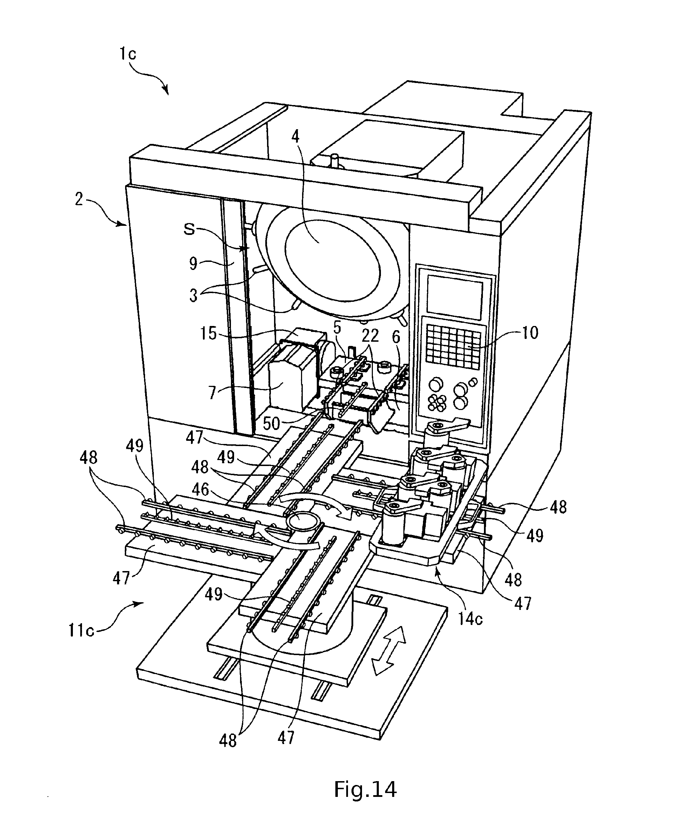

Next, the NC machine tool 1c according to embodiment 4 will be described with reference to FIG. 14. The same reference numerals are used for the same constituent elements as those described in the embodiments described above, and a redundant description is omitted. FIG. 14 is a perspective view showing the NC machine tool 1b in embodiment 4. Hereinbelow, the front side of the paper surface of FIG. 14 will be referred to as the front surface (front side) of the NC machine tool 1c.

The mount 11c disposed at the front surface of the case 2 has four rectangular mounting plates 47 that are rotated in the horizontal direction about a rotating shaft 46, as shown in FIG. 14, and the lengthwise directions of each of the mounting plates 47 are arranged so as to face four directions. Two transfer rail members 48 as guidance routes along the lengthwise direction are provided to the upper surface of the mounting plates 47, and a conveyor 49 is disposed between the transfer rail members 48.

The mount 11c is designed to be slidably moved in the forward/rearward direction, the distal ends of the mounting plates 47 can be inserted inside the case 2 from the aperture S formed by the opened slide door 9, and the distal ends of the transfer rail members 48 can be brought close to the end portions of the fixed rail members 22. A conveyor 50 is also disposed between the fixed rail members 22. The bottom surface of a work palette 14c is provided with an engagement portion (not shown) that engages the conveyors 49, 50; and the work palette 14c disposed on the conveyors 49, 50 is transferred by the driving of the conveyors 49, 50.

A controller (not shown) controls the conveyors 49, 50, rotates the mount 11c, and moves the mount forward and backward as the NC machine tool 1c performs machining work. The user performs only the work of mounting and dismounting the workpiece 8 of work palette 14c on the mounting plates 47. In the present embodiment, four mounting plates 47 are provided, the mounting plate 47 close to the aperture S corresponds to the retracted position of the present invention, and the other three mounting plates 47 correspond to the standby positions of the present invention.

When the machining work of the NC machine tool 1c is started, the controller (not shown) rotates the mount 11c; moves the work palette 14c that holds the unprocessed workpiece 8 toward the front surface of the case 2, i.e., the standby position; opens the slide door 9; and slides the mount 11c forward to thereby bring the distal ends of the mounting plates 47 close to the fixed rail members 22. The work palette 14c is moved from the mounting plates 47 onto the fixed rail members 22 by driving the conveyor 49.

The work palette 14c is moved onto the elevator rail members 18 by the conveyor 50 disposed between the fixed rail members 22. The elevator rail members 18 and the clamp palette 5 are inclined downward toward the loading direction (rearward direction) of the work palette 14c, the work palette 14c moves to the rearward side by self-weight, and the work palette 14c stops moving when the rear end portion thereof makes contact with the contact pieces 26.

When the machining work on the clamp palette 5 in the machining position is ended, the elevator rail members 18 and the clamp palette 5 are inclined downward toward the conveyance direction (forward direction) of the work palette 14c, whereby the work palette 14c is moved on the fixed rail members 22 by self-weight. The conveyor 50 is driven, the work palette 14c is transferred from the fixed rail members 22 onto the mounting plates 47, the mount 11c is rotated, and the work palette 14c that holds an unprocessed workpiece 8 is transferred toward the front surface of the case 2. Workpieces 8 are thereafter sequentially machined while repeating the actions described above.

In the NC machine tool 1c of the present embodiment 4, the user performs only the work of mounting and dismounting the workpiece 8 on the work palette 14c, and the workload of the user is reduced because the work palette 14c is automatically loaded into the case 2.

Embodiments of the present invention were described above with reference to the diagrams, but the specific configuration is not limited to these embodiments, and variations and additions to the main points of the present invention that do not depart from the scope thereof are included in the present invention.

For example, in embodiment 1, a workpiece 8 was machined by mounting work palettes 14 in alternation with a single clamp palette 5 using two work palettes 14, but machining may be carried out using a plurality of three or more work palettes 14.

In the embodiments described above, a single work palette 14 was detachably mounted on a single clamp palette 5, but a plurality of work palettes 14 may be detachably mounted above and below or to the left and right on a single clamp palette 5.

In the embodiments described above, the same type of workpiece 8 was held on a plurality of work palettes 14 and the controller established settings for performing the same machining for each of the workpieces 8, but the present invention is not limited to this configuration, different types of workpieces 8 may be held on each of a plurality of work palettes 14, and the controller may establish settings for performing different types of machining for each of the workpieces 8. In such a configuration, different types of workpieces 8 can be machined using a single NC machine tool 1, and different types of workpieces 8 can be sequentially loaded in a simple manner into the NC machine tool 1 because the work palettes 14 can be mounted and dismounted from the clamp palette 5.

In the embodiments described above, clamp devices 17 as convexities were provided to the clamp palette 5, and clamp rings 34 as concavities fitted to the clamp devices 17 were provided to the work palettes 14. However, a configuration is also possible in which the clamp rings 34 as concavities are provided to the clamp palette 5, and the clamp devices 17 as convexities are provided to the work palettes 14. The work palettes 14 can be accurately positioned in relation to the clamp palette 5 irrespective of whether the convexities or concavities are provided to either one of the clamp palette 5 and the work palettes 14.

In embodiments 1, 2, and 4 described above, an actuator 21 was driven as an elevator means, whereby the elevator rail members 18 were elevated or lowered to elevate or lower the work palettes 14, and the work palettes 14 were mounted and dismounted from the clamp palette 5. However, the mounting/dismounting of the work palettes 14 and the clamp palette 5 on the elevator rail members 18 can be carried out by elevating and lowering the clamp palette 5 without elevating or lowering the elevator rail members 18. The clamp devices 17 of the clamp palette 5 are elevated or lowered without separately elevating and lowering the work palettes 14 and the clamp palette 5, whereby the work palettes 14 can be mounted on and dismounted from the clamp rings 34, and the work palettes 14 and the clamp palette 5 can be mutually mounted and dismounted.

In embodiments 1 through 3 described above, the user slidably moves the work palettes 14 on the fixed rail members 22 and the elevator rail members 18 to thereby move [the work palettes] from the mount 11 to the clamp palette 5. However, the user may lift and move the work palettes 14 from the mount 11 to the clamp palette 5 without using the fixed rail members 22 and the elevator rail members 18. The work palettes 14 may be lifted and moved using a crane or a manipulator.

In the embodiments described above, fixed rail members 22, elevator rail members 18, or the like were used as guidance means for movably guiding the work palettes 14. However, the guidance means is not limited to a rail, and a guidance path in which a plate member having a sliding surface may be disposed from the clamp palette 5 to the retracted position α. Also possible is a configuration in which a guidance device is disposed inside the case 2 so as to provide guidance from the clamp palette 5 to the retracted position α, and the user applies a force to the work palettes 14 guided by the guidance device to move the work palettes 14 using a small force.

In the embodiments described above, a workpiece 8 was mounted on and dismounted from the work palettes 14 in a state in which the machined workpiece 8 is retracted onto the mount 11, i.e., to the standby position β. However, it is not necessarily required that the workpiece 8 be mounted on and dismounted from the work palette 14 in the standby position β each time the machining of the workpiece 8 has ended. For example, the workpiece 8 may be mounted on and dismounted from the work palette 14 in the standby position β only when the type of work palette 14 is changed in accordance with the change in the type of workpiece 8 to be machined. When the type of workpiece 8 is not changed, a configuration is also possible in which the user puts his hand through the aperture S of the case 2 each time the machining of the workpiece 8 has ended, and the workpiece 8 is directly mounted on and dismounted from the work palette 14 disposed on the clamp palette 5 in the machining position, i.e., the workpiece 8 is mounted and dismounted in the machining position.

In the embodiments described above, a numerically controlled NC machine tool 1 was used an example of a machine tool in which a controller (not shown) automatically controls the relative position between the drill tools 3, the tool unit 4, and the workpiece 8 on the basis of the arrangement position of the tool unit 4 and the arrangement position of the workpiece 8 defined by a coordinate value. However, the present invention is not limited to an NC machine tool 1, and application can also be made to a manual machine tool in which control of the relative position between the drill tools 3, the tool unit 4, and the workpiece 8 is carried out manually. In the case that application is made to this type of manual machine tool, the time in which the work of machining the workpiece 8 is stopped can be reduced and the utilization ratio of the machine tool apparatus can be improved by performing the work of machining the workpiece 8 held on one of the work palettes 14 in the machining position at the same time that the work of mounting and dismounting an unprocessed workpiece 8 on another work palette 14 is carried out.

## Claims

1. A machine tool apparatus (1) for machining a machining object using a tool (3) by controlling the relative position between the tool (3) and said machining object held in a jig, (5, 14)
said jig (5, 14) comprises at least a first jig (14) disposed in a machining position of said machining object, and a second jig (5) which is moveably configured so as to be separate from said first jig (14) and in which said machining object is detachably held; and
said first jig (14) and said second jig (5) have mounting/dismounting means (17) for detachably mounting said second jig (5) on the first jig (14), **characterized in that**
apart from said machining position, a standby position is provided for mounting/dismounting the machining object to/from said second jig (5), and a retracted position for retracting said second jig (5) from said machining position is provided apart from said standby position; and
a guidance means (22) is provided for moveably guiding said second jig (5) between said machining position and said retracted position, and a stopping means (26) is provided for stopping the second jig (5) at said machining position,
said guidance means includes a fixed rail member (22, 22b) for substantially horizontally guiding said second jig (5) to the machining position and an elevator rail member (18, 18b) for elevating and lowering said second jig (5) using said first jig (14) is provided, and
wherein whenever said second jig (5) is carried towards said machining position, at least said elevator rail member (18, 18b) is sloped downwards toward carrying direction, so that said second jig (5) moves in the carrying direction by self-weight and stops by said stopping means (26).

2. The machine tool apparatus according to claim 1, **characterized in that**:
a convexity that fits into said second jig (5) is provided to said first jig (14), and
a concavity that fits onto said convexity is provided to said second jig (5).

3. The machine tool apparatus according to claim 2, **characterized in that** said mounting/dismounting means (17) is disposed in the vicinity of the mutually fitting terminal portions of said convexity and said concavity, and is configured so that a mounting function performed by said mounting/dismounting means is carried out after the fitting of said convexity and said concavity is completed.

4. The machine tool apparatus according to claim 2 or 3, **characterized in that**:
said convexity is provided to the upper surface of said first jig (14).
said convexity is provided to the lower surface of said second jig (5).

5. The machine tool apparatus according to any of claims 1 through 4, **characterized in that** at least two of said standby positions are provided for said single retracted position.

6. The machine tool apparatus according to any of claims 1 through 5, **characterized in that** said standby positions are provided to the left and right of said retracted position.

## Patentansprüche

1. Werkzeugmaschinenvorrichtung (1) für das Bearbeiten eines Bearbeitungsobjekts unter Verwendung eines Werkzeugs (3), indem die relative Position von dem Werkzeug (3) zu dem Bearbeitungsobjekt, das in einer Spannvorrichtung (5, 14) gehaltert ist, gesteuert wird,
wobei die Spannvorrichtung (5, 14) wenigstens eine erste Spannvorrichtung (14), die in einer Bearbeitungsposition des Bearbeitungsobjekts angeordnet ist, und eine zweite Spannvorrichtung (5), die bewegbar so ausgestaltet ist, dass sie von der ersten Spannvorrichtung (14) getrennt ist, und in welcher das Bearbeitungsobjekt lösbar gehaltert ist, umfasst, und
die erste Spannvorrichtung (14) und die zweite Spannvorrichtung (5) eine Montage/Demontage-Vorrichtung zum lösbaren Montieren der zweiten Spannvorrichtung (5) auf der ersten Spannvorrichtung (14) haben, **dadurch gekennzeichnet, dass**
abgesehen von der Bearbeitungsposition eine Warteposition bereitgestellt wird, um das Bearbeitungsobjekt an die Spannvorrichtung zu montieren/von ihr zu demontieren, und abgesehen von der Warteposition eine zurückgezogene Position bereitgestellt wird, um die zweite Spannvorrichtung (5) von der Bearbeitungsposition zurückzuziehen, und
ein Führungselement (22) bereitgestellt wird für das bewegliche Führen der zweiten Spannvorrichtung (5) zwischen der Bearbeitungsposition und der zurückgezogenen Position, und ein Stoppelement (26) bereitgestellt wird, um die zweite Spannvorrichtung in der Bearbeitungsposition zu stoppen,
das Führungselement ein festes Schienenteil (22, 22b) zur im Wesentlichen horizontalen Führung der zweiten Spannvorrichtung (5) in die Bearbeitungsposition einschließt und ein Hebeschienenteil (18, 18b) bereitgestellt wird zum Heben und Senken der zweiten Spannvorrichtung (5), die die erste Spannvorrichtung (14) verwendet, und
wobei wenigstens das Hebeschienenteil (18, 18b) nach unten in die Transportrichtung geneigt wird, wenn die zweite Spannvorrichtung (5) auf die Bearbeitungsposition zu bewegt wird, so dass sich die zweite Spannvorrichtung (5) durch ihr eigenes Gewicht in die Transportrichtung bewegt und durch das Stoppelement (26) gestoppt wird.

2. Werkzeugmaschinenvorrichtung gemäß Anspruch 1, **dadurch gekennzeichnet, dass** eine Konvexität, die in die zweite Spannvorrichtung (5) passt, an der ersten Spannvorrichtung (14) bereitgestellt wird, und
eine Konkavität, die auf die Konvexität passt, an der zweiten Spannvorrichtung (5) bereitgestellt wird.

3. Werkzeugmaschinenvorrichtung gemäß Anspruch 2, **dadurch gekennzeichnet, dass** die Montage/Demontage-Vorrichtung (17) in der Nähe der für beide passenden Endabschnitte der Konvexität und Konkavität angeordnet und so ausgebildet ist, dass eine Montagefunktion von der Montage/Demontage-Vorrichtung ausgeführt werden kann, nachdem die Anpassung der Konvexität und der Konkavität abgeschlossen ist.

4. Werkzeugmaschinenvorrichtung gemäß Anspruch 2 oder 3, **dadurch gekennzeichnet, dass** die Konvexität an der oberen Oberfläche der ersten Spannvorrichtung (14) bereitgestellt wird, die Konvexität an der unteren Oberfläche der zweiten Spannvorrichtung (5) bereitgestellt wird.

5. Werkzeugmaschinenvorrichtung gemäß einem der Ansprüche 1 bis 4, **dadurch gekennzeichnet, dass** wenigstens zwei Wartepositionen für die einzige zurückgezogene Position bereitgestellt werden.

6. Werkzeugmaschinenvorrichtung gemäß einem der Ansprüche 1 bis 5, **dadurch gekennzeichnet, dass** die Wartepositionen links und rechts von der zurückgezogene Position bereitgestellt werden.

## Revendications

1. Machine-outil (1) pour l'usinage d'un objet à usiner, ladite machine-outil utilisant un outil (3) tout en contrôlant la position relative entre l'outil (3) et ledit objet à usiner maintenu dans une monture (5, 14),
ladite monture (5, 14) comprenant au moins une première monture (14) placée dans une position d'usinage dudit objet à usiner, et une seconde monture (5) qui est configurée de façon à pouvoir se déplacer et être séparée de ladite première monture (14) et ledit objet à usiner étant maintenu de façon amovible ; et
ladite première monture (14) et ladite seconde monture (5) possédant des moyens de montage/démontage (17) destinés à monter ladite seconde monture (5) de façon amovible sur la première monture (14), **caractérisée en ce que**
outre la position d'usinage, il est prévu une position d'attente pour le montage de l'objet à usiner sur ladite seconde monture (5) et son démontage de celle-ci, et une position rétractée pour retirer ladite seconde monture (5) de ladite position d'usinage ; et
un moyen de guidage (22) est prévu pour guider de façon mobile ladite seconde monture (5) entre ladite position d'usinage et ladite position rétractée, et un moyen de blocage (26) est prévu pour bloquer ladite seconde monture (5) dans ladite position d'usinage,
ledit moyen de guidage inclut un élément formant rail fixe (22, 22b) destiné à guider sensiblement horizontalement ladite seconde monture (5) vers la position d'usinage et un élément formant rail élévateur (18, 18b) destiné à soulever et abaisser ladite seconde monture (5) en utilisant ladite première monture (14), et
chaque fois que ladite seconde monture (5) est amenée dans ladite position d'usinage, au moins ledit élément formant rail élévateur (18, 18b) est incliné vers le bas en direction de la direction de transport, de sorte que ladite seconde monture (5) se déplace dans la direction de transport par son propre poids et est bloquée par ledit moyen de blocage (26).

2. Machine-outil selon la revendication 1, **caractérisée en ce que** :
une convexité qui vient se loger dans ladite seconde monture (5) est prévue sur ladite première monture (14), et
une concavité qui vient se loger sur ladite convexité est prévue sur ladite seconde monture (5).

3. Machine-outil selon la revendication 2, **caractérisée en ce que** ledit moyen de montage/démontage (17) est placé au voisinage des portions terminales de logement mutuel de ladite convexité et de ladite concavité, et est configuré de telle sorte qu'une fonction de montage remplie par ledit moyen de montage/démontage est mise en oeuvre une fois que ladite convexité est logée dans ladite concavité.

4. Machine-outil selon la revendication 2 ou 3, **caractérisée en ce que** :
ladite convexité est prévue sur la surface supérieure de ladite première monture (14),
ladite convexité est prévue sur la surface inférieure de ladite seconde monture (5).

5. Machine-outil selon l'une quelconque des revendications 1 à 4, **caractérisée en ce qu'**au moins deux desdites positions d'attente sont prévues pour ladite unique position rétractée.

6. Machine-outil selon l'une quelconque des revendications 1 à 5, **caractérisée en ce que** lesdites positions d'attente sont prévues à droite et à gauche de ladite position rétractée.
